# FASCICULE DE BREVET EUROPEEN

(11) **EP 3 617 645 B1**
(45) Date de publication et mention de la délivrance du brevet: **24.03.2021**
(21) Numéro de dépôt: 19194575.7
(22) Date de dépôt: 30.08.2019
(51) Int. Cl.: G01B 21/08

(54) **DISPOSITIF D'IDENTIFICATION DE DÉFORMATIONS SUR UNE SURFACE MÉTALLIQUE RÉFLÉCHISSANTE, DISPOSITIF D'EXPERTISE METTANT EN OEUVRE UN TEL DISPOSITIF D'IDENTIFICATION DE DÉFORMATIONS ET PROCÉDÉ D'EXPERTISE DE DÉFORMATIONS ASSOCIÉ**
IDENTIFIKATIONSVORRICHTUNG VON DEFORMATIONEN AUF EINER REFLEKTIERENDEN METALLOBERFLÄCHE, PRÜFVORRICHTUNG, DIE EINE SOLCHE IDENTIFIKATIONSVORRICHTUNG VON DEFORMATIONEN ANWENDET, UND ENTSPRECHENDES VERFAHREN ZUR PRÜFUNG VON DEFORMATIONEN
DEVICE FOR IDENTIFYING DEFORMATIONS ON A REFLECTIVE METAL SURFACE, APPRAISAL DEVICE IMPLEMENTING SUCH A DEVICE FOR IDENTIFYING DEFORMATIONS AND ASSOCIATED METHOD OF APPRAISAL OF DEFORMATIONS

(30) Priorité: 30.08.2018 FR 1857824
(43) Date de publication de la demande: 04.03.2020
(73) Titulaire: T.S.L (Tôlier Sous Laque), 90000 Belfort (FR)
(72) Inventeur: SOUAKRIA, Karim, 90000 BELFORT (FR)
(74) Mandataire: Croonenbroek, Thomas Jakob

(56) Documents cités:
- DE-U1-202012 100 277
- FR-A1- 3 075 371
- JP-A- 2014 002 041
- US-A1- 2017 184 274
- US-A1- 2018 012 350

## Description

La présente invention concerne le domaine de l'identification de déformations pouvant être présentes sur une surface métallique réfléchissante et diffusante, comme par exemple une pièce de carrosserie d'un véhicule automobile. De telles déformations peuvent par exemple être réalisées lors d'un épisode de grêle ou suite à des impacts comme par exemple des coups de portière ou encore un accrochage. Plus particulièrement, la présente invention concerne un dispositif d'identification de déformations d'une surface métallique réfléchissante à contrôler, un dispositif d'expertise mettant en œuvre un tel dispositif d'identification de déformations, ainsi qu'un procédé d'expertise de déformations associé.

De nos jours, il existe de nombreuses techniques permettant de débosseler des surfaces métalliques suite à des chocs ou des impacts qui auraient déformé cette surface métallique. Ces différentes techniques peuvent être plus ou moins longues, complexes et coûteuses.

Dans le domaine de la carrosserie automobile en particulier, le nombre de pièces de carrosserie à débosseler peut être important, notamment dans des régions régulièrement touchées par des événements météorologiques entraînant de la grêle ou encore dans des zones de forte densité automobile où les accrochages ou encore les coups de portière peuvent être fréquents. Dans certaines situations, il peut être facile d'identifier les déformations sur cette carrosserie. Toutefois, dans d'autres cas, cette identification peut être plus difficile à effectuer, notamment lorsqu'il s'agit de déformations liées à de la grêle, ou encore lorsqu'il s'agit de déformations de petites tailles par exemple. De plus, au cours de l'opération de débosselage et notamment en fin d'opération, il peut être intéressant d'évaluer la qualité du débosselage, et en particulier si la pièce de carrosserie a retrouvée sa forme d'origine afin que cette dernière reprenne ses fonctions et son aspect esthétique originels.

Une technique de débosselage permettant de diminuer les coûts et les temps d'intervention est apparue au cours de ces dernières années. Cette technique correspond au débosselage à froid sans peinture. Pour la mise en œuvre de cette technique, la carrosserie du véhicule automobile est éclairée par une lumière rasante afin de pouvoir identifier d'éventuelles déformations. Cette technique est également utilisée par les constructeurs de véhicules automobiles en bout de chaîne de production afin d'assurer un contrôle qualité de leurs véhicules, notamment au niveau de l'état de la carrosserie en bout de chaîne de production.

L'identification des déformations est réalisée grâce à l'expérience d'un opérateur car il est nécessaire pour cet opérateur de positionner son œil à l'opposé de cette lumière rasant la surface de la carrosserie du véhicule automobile afin de discerner une irrégularité de la tôle. Toutefois, pour des déformations de petites tailles de cette carrosserie, cette technique peut présenter de nombreuses limites. De plus le positionnement de l'œil dans le faisceau lumineux de la lampe peut provoquer une gène et une fatigue visuelle pour l'opérateur ainsi qu'une altération de sa vue à plus ou moins long terme.

Par ailleurs, les différents dispositifs d'identification de déformations d'une surface, comme par exemple d'une pièce de carrosserie, sont généralement de taille importante et peuvent donc être difficiles à déplacer Différents systèmes d'identification de déformations d'une surface sont connus par exemple des documents US2018/012350 A1, JP2014002041 A1, DE202012100277 U1, US2017/184274 A1, FR3075371 A1.

Un objectif de la présente invention est de proposer un dispositif d'identification de déformations d'une surface quelle que soit la taille de cette déformation.

Un autre objectif de la présente invention, différent de l'objectif précédent, est de proposer un dispositif d'identification de déformations d'une surface dont l'utilisation permet de limiter la gène ou la fatigue visuelle d'un opérateur.

Un autre objectif de la présente invention, différent des objectifs précédents, est de proposer un dispositif d'identification de déformations sur une surface qui soit bon marché et facilement déplaçable, notamment par l'opérateur.

Un autre objectif de la présente invention, différent des objectifs précédents, est de proposer un procédé d'expertise de déformations d'une surface dont la mise en œuvre est simplifiée et qui permet notamment de limiter la fatigue visuelle de l'opérateur.

Afin d'atteindre au moins partiellement au moins l'un des objectifs énoncés précédemment, la présente invention a pour objet un dispositif d'expertise de déformations telles qu'un bosselage, un impact ou un enfoncement sur une surface métallique réfléchissante, notamment d'une pièce de carrosserie d'un véhicule automobile, le dispositif d'expertise comporte un ensemble portatif comprenant :
→ un dispositif d'identification de déformations, telles qu'un bosselage, un impact ou un enfoncement, sur une surface métallique réfléchissante à contrôler, notamment d'une pièce de carrosserie d'un véhicule automobile, comportant :
   un dispositif d'éclairage comprenant :
   ∘ un boîtier présentant un fond et un cadre, ledit cadre définissant une ouverture, et la surface extérieure du fond comprenant des moyens de préhensions,
   ∘ une pluralité de diodes électroluminescentes disposées sur une surface intérieure du fond du boîtier,
   ∘ une mire recouvrant l'ouverture et disposée entre ladite pluralité de diodes électroluminescentes et ladite surface métallique réfléchissante à contrôler, ladite mire présentant une pluralité de stries configurées pour permettre le passage d'au moins une partie de la lumière émise par la pluralité de diodes électroluminescentes, lesdites stries étant espacées les unes des autres par des bandes sombres de manière à ce que les stries sont projetées sur la surface métallique réfléchissante à contrôler lorsque les diodes électroluminescentes sont allumées,
→ au moins une caméra configurée pour capturer des images de la réflexion sur la surface métallique réfléchissante à contrôler de la lumière émise par le dispositif d'éclairage, la caméra est disposée sur un bras relié au dispositif d'éclairage, de sorte que ladite caméra est décalée par rapport au dispositif d'éclairage,
   le dispositif d'expertise de déformations comportant de plus :
   - une caméra additionnelle disposée de manière fixe de sorte à prendre des images comportant au moins une immatriculation du véhicule automobile et un opérateur utilisant le dispositif d'identification de déformations, et
   - une unité de traitement configurée pour mettre en corrélation des fichiers créés par le dispositif d'identification de déformations d'une part et par la caméra additionnelle d'autre part, lesdits fichiers contenant respectivement des données propres.

L'utilisation de diodes électroluminescentes permet de limiter les consommations énergétiques nécessaires pour leur fonctionnement et donc l'éclairage de la surface métallique réfléchissante à contrôler. Ainsi, le dispositif d'éclairage du dispositif d'identification de déformations peut être alimenté par une batterie d'alimentation et donc être mobile sans avoir à prendre en considération le besoin de l'alimentation électrique de ce dispositif d'éclairage. Par ailleurs, la détection des déformations sur la surface métallique réfléchissante à contrôler est réalisée par détection d'une déformation d'une strie réfléchie par cette surface. Ainsi, la détection de déformations de petites tailles est facilité. De plus, l'utilisation d'un tel dispositif d'éclairage permet de prévenir toute gène ou fatigue oculaire de l'opérateur car la détection des déformations se fait par observation des stries de lumière réfléchies par la surface métallique réfléchissante à contrôler et non plus par observation d'une lumière rasante.

Le dispositif d'identification de déformations selon l'invention peut comprendre en outre une ou plusieurs des caractéristiques suivantes prises seules ou en combinaison.

Selon un aspect, les diodes électroluminescentes sont disposées sur des rubans, lesdits rubans étant disposés parallèlement les uns aux autres.

Selon cet aspect, la surface intérieure du fond est configurée pour servir de support aux rubans portant les diodes électroluminescentes.

Selon un mode de réalisation particulier, les diodes électroluminescentes sont disposées à des intervalles réguliers les unes des autres.

Selon une première variante de ce mode de réalisation particulier, les diodes électroluminescentes sont disposées à des intervalles réguliers selon une direction longitudinale.

Selon une deuxième variante de ce mode de réalisation particulier, les diodes électroluminescentes sont disposées à des intervalles réguliers selon une direction verticale.

Selon une troisième variante de ce mode de réalisation particulier, les diodes électroluminescentes sont disposées à des intervalles réguliers selon une direction diagonale située entre la direction longitudinale et la direction verticale.

Selon une quatrième variante de ce mode de réalisation particulier, les diodes électroluminescentes sont disposées à des intervalles réguliers selon la direction longitudinale et la direction verticale.

Selon un aspect, la mire est réalisée en un matériau rigide, notamment en verre, en polycarbonate, ou encore en plexiglas.

Selon un autre aspect, la mire est réalisée en un matériau souple, notamment en tissus.

Selon cet autre aspect, le matériau souple peut également être choisi parmi les triacétates de cellulose, les polyesters, les polyéthylènes, ou encore les papiers tels que le papier calque ou le papier cristal.

Selon un mode de réalisation particulier, les bandes sombres entre les stries sont formées sur la mire par impression.

La mire peut coopérer avec le cadre par collage.

De manière alternative, la mire peut coopérer avec le cadre à l'aide de moyens de coopération complémentaires tels que des moyens d'encliquetage, un système de crochets et d'anneaux, ou encore un système de vissage.

Le boîtier présente une profondeur, s'étendant entre le fond et l'ouverture, inférieure à 20 cm, et notamment comprise entre 3 cm et 10 cm, définissant ainsi une distance entre les diodes électroluminescentes et la mire.

Selon un mode de réalisation particulier, le cadre du boîtier présente une surface intérieure disposée en regard des diodes électroluminescentes, les surfaces intérieures du cadre et du fond du boîtier comprenant un matériau réfléchissant la lumière.

Selon un aspect, le fond du boîtier est réalisé en un matériau métallique, notamment en aluminium, en fer, en zinc, ou dans un alliage de ces métaux.

Selon un mode de réalisation particulier, les stries ont une largeur constante sur l'ensemble de la mire.

Selon ce mode de réalisation particulier, la largeur des stries est comprise entre 2 mm et 20 mm.

Selon un aspect, les stries de la mire forment un angle avec les rubans portant les diodes électroluminescentes compris entre 30° et 60°, notamment 45°.

Selon un mode de réalisation particulier, les stries sont réparties en groupes de stries, lesdites stries étant espacées les unes des autres à l'intérieur d'un groupe de stries par des premières bandes sombres ayant une première largeur et lesdits groupes de stries étant espacés les uns des autres par des deuxièmes bandes sombres ayant une deuxième largeur.

Selon un aspect, les premières et deuxièmes bandes sombres sont de largeurs constantes sur l'ensemble de la mire.

Selon un autre aspect, les premières bandes sombres sont de largeur inférieure à la largeur d'une strie.

De manière alternative, les premières bandes sombres présentent la même largeur que les stries.

Selon une variante, les largeurs des première et des deuxième bandes sombres peuvent être identiques.

Selon encore un autre aspect, les deuxièmes bandes sombres sont de largeur supérieure à la largeur d'une strie, de préférence comprise entre 1,5 et 2 fois la largeur d'une strie.

Selon un mode de réalisation particulier, chaque groupe de stries est composé de trois stries.

De manière optionnelle, le dispositif d'éclairage peut comporter en outre un diffuseur de lumière disposé entre les diodes électroluminescentes et la mire.

Selon un aspect, le diffuseur de lumière est disposé au contact de la mire.

Selon une variante, le dispositif d'éclairage peut comprendre une batterie d'alimentation intégrée.

Selon un aspect, le fond du boîtier peut présenter une surface extérieure, opposée à la surface intérieure, comprenant des moyens de préhension.

Selon un autre aspect, le cadre du boîtier peut présenter une surface extérieure, opposée à la surface intérieure, comprenant des moyens de préhension.

Les moyens de préhension peuvent correspondre à une poignée tournante.

Selon encore un autre aspect, la surface extérieure du fond du boîtier peut présenter des moyens de coopération avec un support.

Selon encore un autre aspect, la surface extérieure du cadre du boîtier peut présenter des moyens de coopération avec un support.

Selon un mode de réalisation particulier, le support peut être configuré pour assurer la fixation du dispositif d'éclairage sur la surface métallique réfléchissante à contrôler, à cet effet le support peut notamment présenter une ventouse.

Selon un aspect, la caméra est disposée sur un bras relié au dispositif d'éclairage, de sorte que ladite caméra est décalée par rapport au dispositif d'éclairage.

Selon une variante, le bras est amovible du dispositif d'éclairage.

Selon un mode de réalisation particulier, le bras présente une première extrémité portant la caméra et une deuxième extrémité présentant un système d'accrochage configuré pour coopérer avec la surface extérieure du fond du boîtier du dispositif d'éclairage afin de permettre la fixation de la caméra sur le dispositif d'éclairage.

Selon ce mode de réalisation particulier, le système d'accrochage peut être une pince dont une des pattes est solidaire du bras.

Selon une variante, le bras peut être télescopique.

Selon une autre variante, le bras peut être flexible.

La caméra présente une optique orientée de manière à pouvoir capturer des images de la surface métallique réfléchissante à contrôler.

L'optique de la caméra et la mire sont dans deux plans distincts.

Selon une variante, l'optique de la caméra est mobile en pivotement par rapport au bras.

Selon un mode de réalisation particulier, le dispositif d'identification de déformations comprend des moyens de traitement d'images.

Selon un aspect, les moyens de traitement d'images sont déportés de la caméra.

Selon un autre aspect, les moyens de traitement d'images sont intégrés à la caméra.

Selon une variante, la caméra comprend des moyens de transmission des images capturées ou traitées.

Selon cette variante, les moyens de transmission des images traitées peuvent comprendre une antenne Wifi®, une antenne Bluetooth®, un câble de raccordement.

Selon un premier aspect, les moyens de traitement d'images peuvent être configurés pour déterminer la localisation des déformations sur la surface métallique réfléchissante à contrôler.

Selon un deuxième aspect, les moyens de traitement d'images peuvent être configurés pour comptabiliser le nombre de déformations sur la surface métallique réfléchissante à contrôler.

Selon un mode de réalisation particulier, la caméra peut être alimentée électriquement par la batterie d'alimentation du dispositif d'éclairage.

La présente invention a également pour objet un procédé d'expertise de déformations sur une surface métallique réfléchissante, notamment d'une pièce de carrosserie d'un véhicule automobile, telles qu'un bosselage, un impact, ou un enfoncement, le procédé mettant en œuvre un dispositif d'expertise tel que défini précédemment et comportant les étapes suivantes :
- disposition de la caméra additionnelle de manière fixe afin de capturer des images comportant au moins une immatriculation du véhicule automobile et d'un opérateur manipulant le dispositif d'identification de déformations,
- déclenchement d'un enregistrement respectivement des images capturées par la caméra additionnelle d'une part et par la caméra du dispositif d'identification de déformations d'autre part,
- arrêt de l'enregistrement et sauvegarde dans des fichiers distincts des images capturées par la caméra additionnelle d'une part et par la caméra du dispositif d'identification de déformations d'autre part, et
- mise en corrélation de ces fichiers distincts par l'unité de traitement.

D'autres avantages et caractéristiques de la présente invention apparaîtront plus clairement à la lecture de la description suivante, donnée à titre illustratif et non limitatif et des dessins annexés dans lesquels :
- la figure 1 est une représentation schématique en perspective d'un dispositif d'identification de déformations,
- la figure 2 est une représentation schématique en perspective de l'intérieur d'un boitier constituant un dispositif d'éclairage du dispositif d'identification de déformations de la figure 1 selon un mode de réalisation particulier,
- la figure 3 est une représentation schématique d'une mire du dispositif d'éclairage de la figure 2,
- la figure 4 est une représentation schématique en perspective du dispositif d'éclairage de la figure 2,
- la figure 5 est une représentation schématique en perspective d'une image réfléchie de la mire de la figure 3 sur une surface métallique réfléchissante à contrôler,
- la figure 6 est une représentation schématique en perspective d'un bras supportant une caméra du dispositif d'identification de déformations de la figure 1,
- la figure 7 est une représentation schématique d'un organigramme illustrant différentes étapes d'un procédé d'expertise de déformations sur une surface métallique réfléchissante à contrôler,
- la figure 8A est une représentation schématique en perspective décalée d'un dispositif d'expertise de déformations utilisé sur un véhicule automobile, et
- la figure 8B est une représentation schématique en perspective latérale du dispositif d'expertise de la figure 8A.

Les éléments identiques sur les différentes figures portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées et/ou interchangées pour fournir d'autres réalisations.

Dans la description suivante, il est fait référence à une première et à une deuxième extrémités du bras, et à une première et à une deuxième largeurs des bandes sombres. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps pour apprécier le fonctionnement du dispositif d'identification de déformations ou du dispositif d'expertise de déformations, ou encore pour apprécier l'agencement des différents éléments composant ces dispositifs.

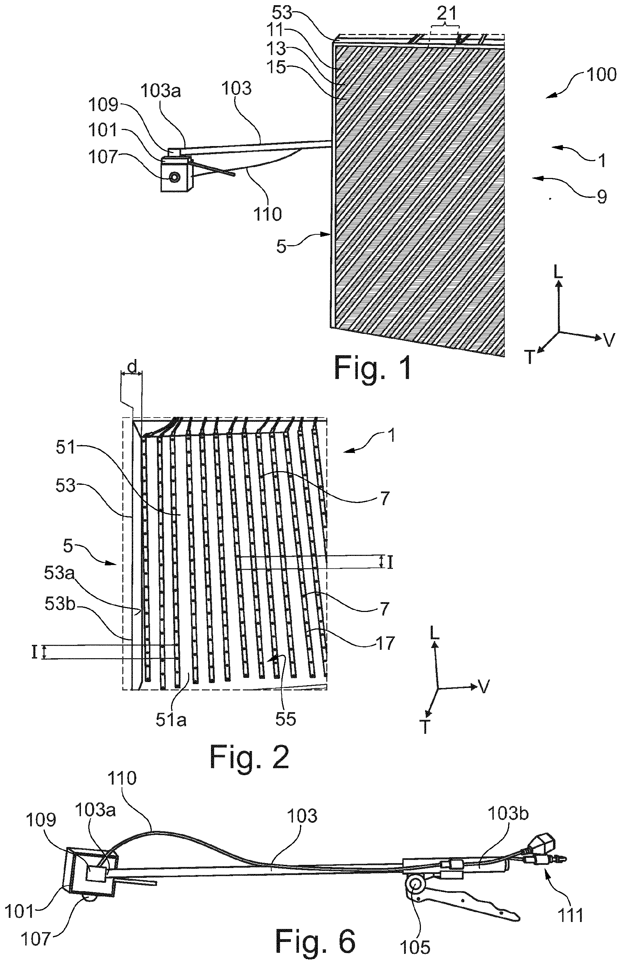

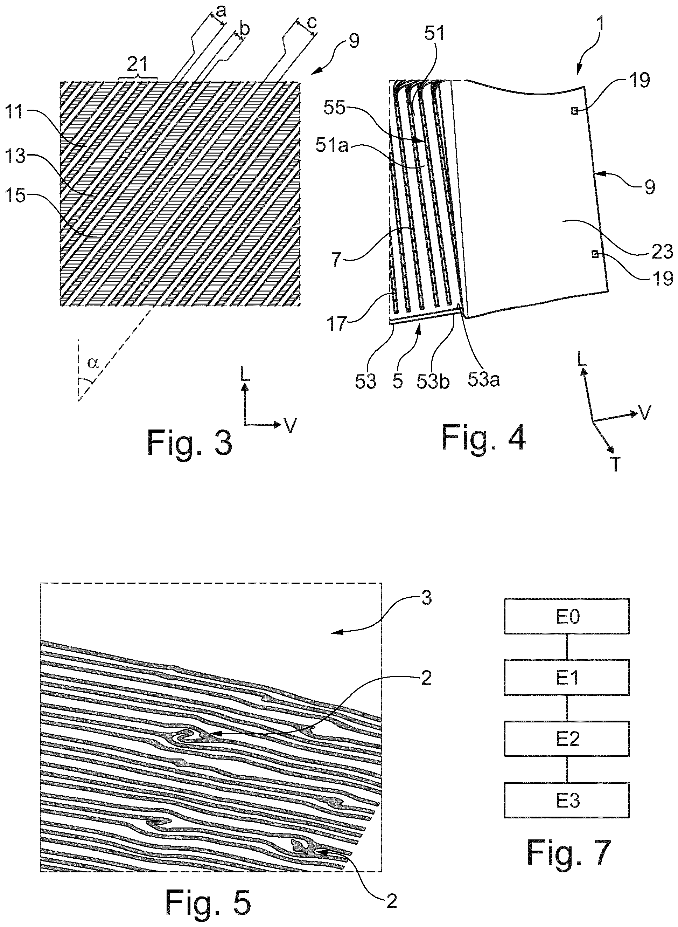

Dans la description suivante, on se réfère à une orientation en fonction des axes Longitudinal, Vertical et Transversal tels qu'ils sont définis arbitrairement par le trièdre L, V, T représenté sur les figures 1, 3 et 5 et représenté partiellement sur la figure 4. Le choix des appellations de ces axes n'est pas limitatif de l'orientation que peut prendre le dispositif d'identification de déformations dans son application pour la détermination de déformations sur une surface métallique réfléchissante à contrôler.

Dans la description suivante, on entend par « surface réfléchissante », une surface ayant la capacité de renvoyer dans le milieu dont elles proviennent au moins une partie des ondes lumineuses reçues.

Par ailleurs, on entend par « stries » dans la description suivante, des lignes ou des rayures parallèles qui se détachent sur un fond.

D'autre part, on entend par « surface interne » pour la cavité ou le boîtier dans la description suivante, la surface disposée en regard des diodes électroluminescentes. De même, on entend par « surface externe » dans la description suivante, la surface de ces éléments disposée au contact de l'environnement extérieur du boîtier. La surface externe pour chacun de ces éléments est disposée à l'opposé de la surface interne.

Ensuite, on entend par « intervalles réguliers » dans la description suivante, un espace entre deux éléments, à savoir ici deux diodes électroluminescentes, qui est constant selon au moins une direction de l'espace (longitudinale ou verticale) et qui se répète de manière inchangée pour l'ensemble de l'élément, à savoir ici pour l'ensemble du dispositif d'éclairage.

De plus, on entend dans la description suivante par « matériau souple », un matériau qui se plie aisément sans se rompre ou se fissurer. De même, on entend par « matériau rigide » dans la description suivante, un matériau qui n'a pas la faculté de se plier.

Enfin, on entend dans la description suivante par « spectre visible », le spectre du rayonnement électromagnétique ayant des longueurs d'ondes comprises entre 380 et 780 nm.

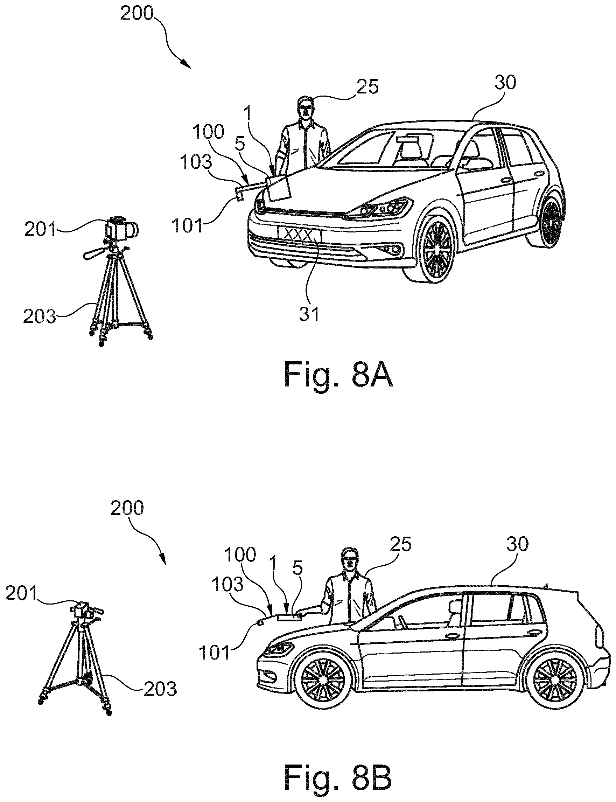

En référence à la figure 1, il est représenté un dispositif d'identification de déformations 100, telles qu'un bosselage, un impact ou un enfoncement, sur une surface métallique réfléchissante à contrôler 3 (visible sur la figure 5), notamment d'une pièce de carrosserie d'un véhicule automobile 30 (visible sur les figures 8A et 8B). Le dispositif d'identification de déformations 100 comporte au moins un dispositif d'éclairage 1 (représenté plus en détail en référence aux figures 2 à 4) configuré pour éclairer la surface métallique réfléchissante à contrôler 3 et une caméra 101 configurée pour capturer des images de la réflexion sur la surface métallique réfléchissante à contrôler 3 de la lumière émise par le dispositif d'éclairage 1.

Le dispositif d'éclairage 1 pour l'identification de déformations 2 (visibles sur la figure 5) comprend un boîtier 5, une pluralité de diodes électroluminescentes 7 (visibles sur les figures 2 et 4) logées dans le boîtier 5 et une mire 9 disposée entre la pluralité de diodes électroluminescentes 7 et la surface métallique réfléchissante à contrôler 3. La mire 9 présente une pluralité de stries 11 configurées pour permettre le passage d'au moins une partie de la lumière émise par la pluralité de diodes électroluminescentes 7. Les stries 11 sont espacées les unes des autres par des bandes sombres 13, 15 (mieux visibles en référence à la figure 3) de manière à ce que les stries 11 sont projetées sur la surface métallique réfléchissante à contrôler 3 lorsque les diodes électroluminescentes 7 sont allumées. A cet effet, les bandes sombres 13, 15 présentent une transmittance dans le spectre visible inférieure ou égale à 20 % et les stries 11 présentent une transmittance dans le spectre visible supérieure ou égale à 75 %. Les bandes sombres 13, 15 peuvent donc être réalisées en un matériau opaque ou non. D'autre part, les bandes sombres 13, 15 sont disposées parallèles entre elles et donc parallèles aux stries 11 également.

En référence aux figures 1 et 2, le boîtier 5 présente un fond 51 et un cadre 53, ledit cadre 53 définissant une ouverture 55 recouverte par la mire 9. Par ailleurs, les diodes électroluminescentes 7 sont disposées sur une surface intérieure 51a du fond 51 du boîtier 5.

En référence aux figures 2 à 4, il est représenté le dispositif d'éclairage 1 selon un mode de réalisation particulier.

En référence à la figure 2, le boîtier 5 présente une profondeur, s'étendant entre le fond 51 et l'ouverture 55. Cette profondeur correspond à la largeur du cadre 53 et s'étend selon l'axe transversal T du boîtier 5. Cette profondeur définit une distance d entre les diodes électroluminescentes 7 et la mire 9 (visible notamment sur la figure 4) lorsque cette mire 9 recouvre l'ouverture 55. Selon ce mode de réalisation particulier, cette profondeur est inférieure à 20 cm, et notamment comprise entre 3 cm et 10 cm. En effet, pour que la lumière passant à travers les stries 11 soit suffisamment homogène, cette distance d doit être d'au moins 3 cm. Dans le cas contraire, ces stries ne sont pas correctement projetées sur la surface métallique réfléchissante à contrôler 3, et pourront apparaître par exemple sous forme de points lumineux. De plus, afin d'améliorer l'homogénéisation du flux lumineux projeté sur la surface métallique réfléchissant à contrôler 3, le dispositif d'éclairage 1 peut présenter un diffuseur de lumière 23 (visible sur la figure 4) disposé entre les diodes électroluminescentes 7 et la mire 9. Ce diffuseur de lumière 23 est décrit plus en détail ultérieurement.

Par ailleurs, le fond 51 du boîtier 5 est réalisé en un matériau métallique, notamment en aluminium, en fer, et notamment en acier, en zinc, dans un alliage de ces métaux, en carbone, ou encore en matière plastique. L'utilisation de ces matériaux pour constituer le fond 51 du boîtier 5 permet de limiter l'échauffement de ce boîtier 5, de prévenir d'éventuelles déformations de celui-ci liées à son transport ou à son entreposage. De plus, de tels matériaux sont facilement disponibles et bon marché, ce qui permet de limiter les coûts associés à la fabrication du boîtier 5.

Le cadre 53 du boîtier 5 présente une surface intérieure 53a disposée en regard des diodes électroluminescentes 7. Selon un mode de réalisation non représenté ici, les surfaces intérieures 51a, 53a du cadre 53 et du fond 51 du boîtier 5 peuvent comprendre un matériau réfléchissant la lumière émise par les diodes électroluminescentes 7. L'utilisation d'un tel matériau réfléchissant peut par exemple permettre une amélioration de la quantité de lumière émise par les diodes électroluminescentes 7 et transmise à travers les stries 11 en direction de la surface métallique réfléchissante à contrôler 3.

Selon le mode de réalisation de la figure 2, les surfaces intérieures 51a, 53a du boîtier 51 et du cadre 53 présentent un revêtement mat et sombre, notamment noir. L'utilisation d'un tel revêtement permet de contribuer à l'homogénéisation du flux lumineux émis par les diodes électroluminescentes 7 et passant par les stries 11.

D'autre part, selon le mode de réalisation particulier représenté en référence aux figures 1 à 4, la surface extérieure du fond 51 peut comprendre des moyens de préhension, comme par exemple une poignée, éventuellement tournante. Ainsi, le dispositif d'identification de déformations 100 peut être portatif afin de pouvoir être déplacé par l'opérateur sur la surface métallique réfléchissante à contrôler 3. De manière alternative, la surface extérieure du fond 51 du boîtier 5 peut présenter des moyens de coopération avec un support (non représenté) afin d'assurer son installation à proximité de ou sur la surface métallique réfléchissante à contrôler 3.

D'autre part, le cadre 53 du boîtier 5 présente une surface extérieure 53b. Cette surface extérieure 53b du cadre 53 peut comprendre, selon un mode de réalisation non représenté ici, des moyens de préhension par un opérateur afin d'assurer la mobilité du dispositif d'identification de déformations 100. Selon une alternative, la surface extérieure 53b du cadre 53 du boîtier 5 peut présenter des moyens de coopération avec un support.

Selon les alternatives dans lesquelles le dispositif d'identification de déformations 100 comprend le support, celui-ci peut être configuré pour assurer la fixation du dispositif d'éclairage 1 sur la surface métallique réfléchissante à contrôler 3. A cet effet, le support peut notamment présenter une ventouse. Dans le cas où le support présente une ventouse, au moins le dispositif d'éclairage 1 peut être disposé de manière fixe grâce à la pression de l'air sur la surface métallique réfléchissante à contrôler 3 ou à proximité, comme par exemple sur une partie de la carrosserie du véhicule automobile proche ou confondue avec la pièce de carrosserie à inspecter, sans risquer d'endommager cette dernière grâce à la ventouse. Il est donc possible d'installer ce dispositif d'éclairage 1 de manière fixe afin de pouvoir éventuellement l'utiliser comme éclairage au cours d'une éventuelle opération de débosselage.

En référence à la figure 2, les diodes électroluminescentes 7 sont disposées sur des rubans 17. Les rubans 17 s'étendent selon l'axe longitudinal L. Par ailleurs, la surface intérieure 51a du fond 51 est configurée pour servir de support aux rubans 17 portant les diodes électroluminescentes 7. Les rubans 17 peuvent par exemple être solidarisés à la surface intérieure 51a du fond 51 à l'aide d'un adhésif. De plus, les rubans 17, selon ce mode de réalisation particulier, sont disposés sensiblement parallèles les uns par rapport aux autres sur la surface intérieure 51a du fond 51 du boîtier 5.

Afin de contribuer à une bonne homogénéité du flux lumineux émis par les diodes électroluminescentes 7, celles-ci sont disposées à des intervalles I réguliers les unes des autres. Selon le mode de réalisation particulier de la figure 2, les diodes électroluminescentes 7 sont disposées à des intervalles I réguliers selon l'axe longitudinal L du boîtier 5.

Selon d'autres variantes non représentées ici, les rubans 17 s'étendent selon l'axe longitudinal L et les diodes électroluminescentes 7 peuvent être disposées à des intervalles I réguliers selon l'axe vertical V, selon une direction diagonale située entre l'axe longitudinal L et l'axe vertical V. Selon une autre variante, les rubans 17 s'étendent selon l'axe longitudinal L et les diodes électroluminescentes 7 sont disposées à des intervalles I réguliers selon l'axe longitudinal L et l'axe vertical V du boîtier 5, c'est-à-dire que les rubans 17 sont espacés les uns des autres du même intervalle I que les diodes électroluminescentes 7 disposées sur les rubans 17 et que les diodes électroluminescentes 7 sont alignées selon l'axe longitudinal L et l'axe vertical V.

En référence à la figure 3, la mire 9 peut être réalisée en un matériau souple, notamment en tissus. Selon, d'autres modes de réalisation non représentés ici, le matériau souple peut être choisi parmi les triacétates de cellulose, les polyesters, les polyéthylènes, ou encore les papiers tels que le papier calque ou le papier cristal. Ces différents matériaux souples sont légers. L'utilisation d'un matériau souple pour la mire 9 permet de tendre cette dernière sur l'ouverture 55 (visible sur les figures 2 et 4) définie par le cadre 53 et contribue à l'obtention d'un dispositif d'identification de déformations 100 dont la masse est limitée afin de faciliter son déplacement et sa manipulation par un opérateur par exemple. De plus, de tels matériaux sont bon marché et facilement disponible ce qui permet de limiter les coûts de conception de la mire 9, et donc du dispositif d'éclairage 1 du dispositif d'identification de déformations 100.

Selon encore une autre variante non représentée ici, la mire 9 peut être réalisée en un matériau rigide, notamment en verre, en polycarbonate, ou encore en plexiglas.

A titre d'exemple non limitatif illustré par la figure 3, les bandes sombres 13, 15 entre les stries 11 sont formées sur la mire 9 par impression.

Selon le mode de réalisation particulier de la figure 1, la mire 9 coopère avec le cadre 53 par collage. A cet effet, la mire présente sur une face disposée en regard des diodes électroluminescentes 7 au moins un élément adhésif 19 (visible sur la figure 4) configuré pour venir au contact du cadre 53 et d'assurer l'adhésion de la mire 9 sur ce cadre 53.

Selon d'autres variantes non représentées ici, la mire 9 peut coopérer avec le boîtier 5, et en particulier avec le cadre 53 à l'aide de moyens de coopération complémentaires, tels que des moyens d'encliquetage, un système de crochets et d'anneaux, ou encore un système de vissage.

Ainsi, la mire 9 forme un plan parallèle au fond 51 du boîtier 5.

D'autre part, en référence à la figure 3, les stries 11 ont une largeur « a » constante sur l'ensemble de la mire 9. Plus particulièrement, en référence à la figure 4, la largeur « a » des stries 11 est comprise entre 2 mm et 20 mm. La largeur « a » des stries 11 est choisie de manière à ce que ces stries 11 soient suffisamment fines afin de permettre une bonne détection des déformations 2. En effet, dans l'éventualité où les stries 11 présenteraient une largeur « a » trop importante, il est possible que l'image réfléchie de ces dernières ne soit pas déformée car la déformation 2 présente sur la surface métallique réfléchissante à contrôler 3 pourrait être située au centre de la réflexion de cette strie 11 et la déformation de cette strie 11 ne pourrait pas forcément être observée.

Selon le mode de réalisation particulier de la figure 3, les stries 11 de la mire 9 forment un angle α avec la projection des rubans 17 portant les diodes électroluminescentes 7 sur la mire 9 compris entre 30° et 60°, notamment 45°. L'angle α correspond également à l'angle formé par les stries 11 avec l'axe longitudinal L.

Selon ce mode de réalisation particulier, les stries 11 sont réparties en groupes de stries 21. Les stries 11 sont espacées les unes des autres à l'intérieur d'un groupe de stries 21 par des premières bandes sombres 13 ayant une première largeur « b » et les groupes de stries 21 sont espacés les uns des autres par des deuxièmes bandes sombres 15 ayant une deuxième largeur « c », définissant ainsi un motif sur la mire 9. Selon ce mode de réalisation particulier, les deuxièmes bandes sombres 15 sont plus larges que les premières bandes sombres 13. D'autre part, les premières bandes sombres 13 et les deuxièmes bandes sombres 15 sont de largeurs constantes sur l'ensemble de la mire 9. De plus, les premières bandes sombres 13 sont de largeur « b » égale à la largeur « a » d'une strie 11 et les deuxièmes bandes sombres 15 sont de largeur « c » supérieure à la largeur « a » d'une strie 11, de préférence la largeur « c » des deuxièmes bandes sombres 15 est comprise entre 1,5 et 2 fois la largeur « a » d'une strie 11.

Selon une variante non représentée ici, la largeur « c » des deuxièmes bandes sombres 15 peut être sensiblement égale à la largeur « a » des stries 11. D'autre part, selon une autre variante non représentée ici, la largeur « b » des premières bandes sombres 13 peut être inférieure à la largeur « a » des stries 11.

Selon le mode de réalisation particulier de la figure 3, chaque groupe de stries 21 est composé de trois stries 11. Toutefois, selon d'autres variantes non représentées ici, un nombre différent de stries 11 par groupe de stries 21 peut être envisagé.

De même que pour la largeur « a » des stries 11, les première « b » et deuxième « c » largeurs des bandes sombres 13, 15 sont choisies suffisamment petites de sorte que les espacements relatifs entre les stries 11 d'une part et les groupes de stries 21 d'autre part soient suffisamment faibles pour pouvoir identifier des déformations 2 même de petites tailles sur la surface métallique réfléchissante à contrôler 3. Selon le mode de réalisation particulier de la figure 3, la largeur « a » des stries 11 et la largeur « b » des premières bandes sombres 13 est d'environ 4 mm, et la largeur « c » des deuxièmes bandes sombres 15 est d'environ 8,5 mm. Plus généralement, afin de déterminer des défauts de petite taille, la largeur « a » des stries 11 est comprise entre 4 mm et 6 mm et afin de déterminer des défauts de plus grande taille, la largeur « a » de ces stries 11 est comprise entre 6 mm et 8 mm. Ainsi, la mire 9 représentée en référence à la figure 3 peut notamment être utilisée afin de permettre la détection de déformations de petite taille.

En référence à la figure 4, le dispositif d'éclairage 1 du dispositif d'identification de déformations 100 comporte en outre le diffuseur de lumière 23 disposé entre les diodes électroluminescentes 7 et la mire 9. Comme énoncé précédemment, la présence de ce diffuseur de lumière 23 permet d'homogénéiser le flux lumineux émis par les diodes électroluminescentes 7. Selon ce mode de réalisation particulier, le diffuseur de lumière 23 est disposé au contact de la mire 9. Ainsi, le diffuseur de lumière 23 et la mire 9 se touchent.

A titre d'exemple non limitatif, le diffuseur de lumière 23 est réalisé en un matériau souple. Selon une variante non représentée ici, le diffuseur de lumière 23 peut être réalisé en un matériau rigide, voire même être intégré au matériau constitutif de la mire 9.

De plus, afin de garantir l'efficacité du diffuseur de lumière 23, celui-ci est disposé à une distance d'au moins 3 cm des diodes électroluminescentes 7. En effet, le diffuseur de lumière 23 est utilisé pour masquer les points lumineux des diodes électroluminescentes 7 et homogénéiser le flux lumineux projeté par le dispositif d'éclairage 1 sur la surface métallique réfléchissante à contrôler 3.

Selon une alternative non représentée ici, le diffuseur de lumière 23 et la mire 9 peuvent être espacés l'un de l'autre.

Selon le mode de réalisation particulier de la figure 4, le diffuseur de lumière 23 permet la coopération de la mire 9 avec le cadre 53. Plus particulièrement, le diffuseur de lumière 23 coopère avec le cadre 53 par collage. A cet effet, le diffuseur de lumière 23 comporte les éléments adhésifs 19 configurés pour venir au contact du cadre 53 afin d'assurer l'adhésion de la mire 9 et du diffuseur de lumière 23 sur ce cadre 53.

Selon une variante non représentée ici, le diffuseur de lumière 23 peut coopérer avec le cadre 53 à l'aide de moyens de coopération complémentaires tels que des moyens d'encliquetage, un système de crochets et d'anneaux, ou encore un système de vissage.

En référence à la figure 5, il est représenté de manière schématique la réflexion de la projection lumineuse des stries 11 sur la surface métallique réfléchissante à contrôler 3. Cette figure 5 correspond donc à une image prise par la caméra 101 du dispositif d'identification de déformations 100 (visibles sur la figure 1) lorsque la surface métallique réfléchissante à contrôler 3 est exposée à la lumière du dispositif d'éclairage 1. Afin de permettre l'éclairage de la surface métallique réfléchissante à contrôler 3 à l'aide du système d'éclairage 1, la mire 9 est disposée sensiblement parallèlement à la surface métallique réfléchissante à contrôler 3 (comme cela est par exemple représenté en référence à la figure 8B). La réflexion de cette lumière permet de déterminer la présence d'une déformation 2 éventuelle sur cette surface métallique réfléchissante à contrôler 3. En effet, dans l'éventualité où une déformation 2 serait présente sur cette surface métallique réfléchissante à contrôler 3, l'image de la strie 11 réfléchie sur cette surface 3 est déformée. Comme on peut le constater, la projection lumineuse de certaines stries 11 n'est pas déformée, c'est-à-dire que cette projection lumineuse est linéaire, alors que d'autres s'enroulent sur elles-mêmes ou présentent une courbure, montrant ainsi la présence de déformations 2 sur cette surface métallique réfléchissante à contrôler 3 qui peuvent par exemple être dues à de la grêle ou encore à des impacts.

Ainsi, le dispositif d'identification de déformations 100 de la figure 1 permet d'identifier des déformations 2 quelles qu'en soient leurs tailles. En effet, même dans le cas de déformations 2 de petite taille, l'image réfléchie des stries 11 par la surface métallique réfléchissante à contrôler 3 est déformée. De plus, un tel dispositif d'identification de déformations 100 permet également de prévenir toute fatigue oculaire d'un opérateur 25 (représenté sur les figures 8A et 8B) car ce dispositif d'identification de déformations 100 ne met pas en œuvre une lumière rasante afin d'identifier d'éventuelles déformations 2 de cette surface 3, mais au contraire l'observation de la réflexion de la lumière émise sur la surface métallique réfléchissante à contrôler 3. De plus, l'identification des déformations 2 est simplifiée car dans le cas de l'utilisation d'une lumière rasante, l'opérateur 25 doit avoir une certaine expérience afin de pouvoir déterminer la présence éventuelle de ces déformations 2. Dans le cas du dispositif d'identification de déformations 100 décrit ici, la détection d'une non-linéarité des stries réfléchies par la surface métallique réfléchissante à contrôler 3 permet d'identifier à elle seule la présence de déformations 2 sur cette surface métallique réfléchissante à contrôler 3.

Par ailleurs, les diodes électroluminescentes 7 consomment peu d'énergie électrique afin d'émettre de la lumière. Ainsi, l'utilisation d'une telle source de lumière permet d'avoir un dispositif d'éclairage 1 autonome, équipé d'une batterie d'alimentation (non représentée) par exemple configurée pour permettre au moins l'alimentation des diodes électroluminescentes 7. Un tel dispositif d'éclairage 1 peut donc être portatif et facilement mobile, comme cela sera développé plus en détail ultérieurement.

En référence aux figures 1 et 6, la caméra 101 est disposée sur un bras 103 relié au dispositif d'éclairage 1. La caméra 101 est ainsi décalée par rapport au dispositif d'éclairage 1 afin de pouvoir prendre des images de la lumière réfléchie par la surface métallique réfléchissante à contrôler 3. Par ailleurs, la caméra 101 présente une optique 107 orientée de manière à pouvoir capturer des images de la surface métallique réfléchissante à contrôler 3. La caméra 101 peut être une simple caméra de prises de vues ou une caméra haute résolution, comme par exemple une caméra 4K qui peut permettre la détection de rayures ou de micro-rayures sur la surface réfléchissante métallique à contrôler 3.

Selon le mode de réalisation particulier de la figure 1, l'optique 107 de la caméra 101 et la mire 9 sont disposées dans deux plans distincts.

En référence à la figure 6, le bras 103 présente une première extrémité 103a portant la caméra 101 et une deuxième extrémité 103b présentant un système d'accrochage 105. Le système d'accrochage 105 est configuré pour coopérer avec une surface extérieure du fond 51 du boîtier 5 du dispositif d'éclairage 1 afin de permettre la fixation de la caméra 101 sur le dispositif d'éclairage 1.

Selon le mode de réalisation particulier des figures 1 et 6, le bras 103 est amovible du dispositif d'éclairage 1. Pour ce faire, le système d'accrochage 105 correspond à une pince dont une des pattes est solidaire du bras 103.

Selon différentes variantes, le bras 103 peut être télescopique ou encore flexible. Selon ces différentes variantes, le bras 103 permet de modifier la position ou l'orientation de l'optique 107 de la caméra 101 et plus particulièrement son angle de vue par exemple, ou encore la distance entre cette optique 107 et la surface métallique réfléchissante à contrôler 3 afin d'avoir une précision plus ou moins importante en ce qui concerne les images acquises par la caméra 101.

Selon encore une autre variante, l'optique 107 de la caméra 101 peut être mobile en pivotement par rapport au bras 103. A cet effet, la première extrémité 103a du bras 103 présente un dispositif de fixation 109 de la caméra 101 configuré pour permettre un déplacement en rotation sur elle-même de cette caméra 101. Plus particulièrement, le dispositif de fixation 109 peut permettre une rotation de l'optique 107 de la caméra 101 selon l'axe longitudinal L ou selon l'axe vertical V. Une telle mobilité peut par exemple permettre de modifier l'angle de vue afin de déterminer si une éventuelle déformation des stries réfléchies sur la surface métallique réfléchissante à contrôler 3 correspond effectivement à une déformation 2 ou si cette déformation de l'image réfléchie des stries correspond à un profilage particulier de cette surface 3.

Selon le mode de réalisation particulier de la figure 1, le dispositif d'identification de déformations 100 peut fonctionner de manière autonome. A cet effet, la caméra 101 peut être alimentée électriquement par la batterie d'alimentation des diodes électroluminescentes 7 du dispositif d'éclairage 1.

En référence aux figures 1 et 6, le dispositif d'identification de déformations 100 comprend des moyens de traitement d'images des images capturées par la caméra 101. Les moyens de traitement d'images peuvent être déportés de la caméra 101 ou intégrés à la caméra 101.

D'autre part, la caméra 101 comprend des moyens de transmission des images capturées ou traitées. Les moyens de transmission des images traitées peuvent comprendre de manière non limitative une antenne Wifi®, une antenne Bluetooth®, ou encore un câble de raccordement 110. Selon le mode de réalisation particulier de la figure 2, les moyens de transmission des images correspondent à un câble de raccordement 110 reliant la caméra 101 à un connecteur 111. Le connecteur 111 est configuré pour assurer la connexion de la caméra 101 avec une unité de traitement (non représentée) afin de permettre par exemple l'extraction des images capturées ou traitées par la caméra 101 pour la création d'un fichier.

Les moyens de traitement d'images peuvent être configurés pour déterminer la localisation des déformations 2, ou encore pour comptabiliser le nombre de déformations 2 sur la surface métallique réfléchissante à contrôler 3. Les moyens de traitement d'images permettent donc une identification plus aisée et plus fiable des déformations 2 présentes sur la surface métallique réfléchissante à contrôler 3 afin d'améliorer l'intervention de l'opérateur. D'autre part, de tels moyens de traitement d'images peuvent permettre un chiffrage de l'intervention et également une vérification rapide de la qualité du débosselage réalisé par l'opérateur une fois cette opération terminée, ce qui permet un suivi qualité des interventions de débosselage aisé.

En référence à la figure 7, il est représenté un organigramme représentant de manière schématique un procédé d'expertise de déformations, telles qu'un bosselage, un impact, ou un enfoncement, sur une surface métallique réfléchissante à contrôler 3, notamment d'une pièce de carrosserie d'un véhicule automobile. Ce procédé d'expertise est mis en œuvre à l'aide d'un dispositif d'expertise de déformations 200 représenté en référence aux figures 8A et 8B.

Le dispositif d'expertise 200 comprend un dispositif d'identification de déformations 100 tel que défini précédemment, une caméra additionnelle 201 disposée fixe devant le véhicule automobile et une unité de traitement. La caméra additionnelle 201 est disposée de manière à prendre des images comportant au moins une immatriculation 31 du véhicule automobile 30 et un opérateur 25 manipulant le dispositif d'identification de déformations 100. La caméra additionnelle 201 est disposée selon ce mode de réalisation particulier sur un trépied 203. Selon d'autres variantes non représentées ici, la caméra additionnelle 201 peut être disposée sur tout autre type de support fixe.

D'autre part, l'unité de traitement est configurée pour mettre en corrélation des fichiers créés par le dispositif d'identification de déformations 100 d'une part et la caméra additionnelle 201 d'autre part. Ces fichiers contiennent respectivement des données propres comme par exemple une durée, une date et une heure de création, ou encore un numéro de dossier.

En revenant sur la figure 7, le procédé d'expertise comprend une étape E0 de disposition de la caméra additionnelle 201 de manière fixe afin de capturer des images au moins de l'immatriculation 31 du véhicule automobile 30 et de l'opérateur 25 manipulant le dispositif d'identification de déformations 100. Selon le mode de réalisation particulier des figures 8A et 8B, la caméra additionnelle 201 est disposée de manière à prendre des images depuis l'avant du véhicule automobile 30. De manière alternative, cette caméra additionnelle 201 peut être disposée à l'arrière du véhicule automobile 30. Il est uniquement nécessaire que cette caméra additionnelle 201 puisse capturer l'immatriculation 31 de ce véhicule automobile 30 et l'opérateur 25 en train de manipuler le dispositif d'identification de déformations 100. La mise en corrélation des différentes images prises respectivement par la caméra 101 du dispositif d'identification de déformations 100 et de la caméra additionnelle 201 permet de localiser la déformation 2 sur la carrosserie du véhicule automobile 30.

De manière optionnelle, le procédé d'expertise peut comprendre une étape de nettoyage de la surface métallique réfléchissante à contrôler 3 dans le cas où cette dernière ne présenterait pas un niveau de propreté satisfaisant pour permettre une bonne réflexion de la lumière émise par les diodes électroluminescentes 7. En effet, la présence de poussière ou encore de boues sur la surface métallique réfléchissante à contrôler 3 peut nuire à la réflexion de la lumière passant par les stries 11 de la mire 9 et peut donc nuire à l'identification des déformations 2, éventuellement présentes sur cette surface métallique réfléchissante à contrôler 3. La présence de telles salissures peut également fausser l'identification de déformations 2 sur cette surface métallique réfléchissante à contrôler 3. Cette étape de nettoyage peut être réalisée en amont du procédé d'expertise et donc en amont de l'étape E0 de disposition de la caméra additionnelle 201.

D'autre part, le procédé d'expertise comprend une étape de déclenchement E1 d'un enregistrement respectivement des images capturées par la caméra additionnelle 201 d'une part et par la caméra 101 du dispositif d'identification de déformations 100 d'autre part. Lors de cet enregistrement des images capturées par la caméra 101 du dispositif d'identification de déformations 100, la surface métallique réfléchissante à contrôler 3 est éclairée à l'aide du dispositif d'éclairage 1 décrit précédemment et la caméra 101 prend des images de cette surface métallique réfléchissante à contrôler 3 présentant éventuellement des déformations 2 qui pourront être identifiées grâce à la déformation des stries réfléchies, comme représenté sur la figure 5. Lors de l'éclairage de la surface réfléchissante métallique à contrôler 3, le dispositif d'éclairage 1 est disposé de sorte que le plan de la mire 9 soit sensiblement parallèle au plan défini par la surface métallique réfléchissante à contrôler 3, comme représenté en référence à la figure 8B. De plus, la caméra additionnelle 201 filme l'opérateur 25 se déplaçant autour du véhicule automobile 30 par exemple avec le dispositif d'identification de déformations 100.

Le procédé met ensuite en œuvre une étape d'arrêt de l'enregistrement et de sauvegarde E2 dans des fichiers distincts des images capturées par la caméra additionnelle 201 d'une part et par la caméra 101 du dispositif d'identification de déformations 100 d'autre part.

Ces fichiers sont ensuite mis en corrélation par l'unité de traitement au cours d'une étape de mise en corrélation E3. Cette étape de mise en corrélation E3 permet entre autre une vérification de la concordance des fichiers issus respectivement de l'enregistrement de la caméra 101 du dispositif d'identification de déformations 100 d'une part et de la caméra additionnelle 201 d'autre part. En effet, dans l'éventualité où les fichiers n'auraient pas la même durée ou encore une date de création différente, l'unité de traitement affichera une erreur et l'opérateur 25 devra sélectionner les bons fichiers afin de permettre l'expertise par exemple du véhicule automobile 30 présentant un bosselage d'au moins une partie de sa carrosserie. Il est ainsi simple de vérifier la conformité de l'expertise réalisée sur un véhicule automobile 30 donné. En effet, dans le cas d'une pluralité de véhicules automobiles 30 à expertiser les uns à la suite des autres, il peut être possible de confondre certains fichiers et cette mise en corrélation permet de prévenir une telle confusion.

De plus, selon une alternative non représentée, il est possible d'utiliser le dispositif d'identification de déformations 100 afin de contrôler la qualité du débosselage une fois celui-ci effectué. En effet, dans l'éventualité où ce débosselage aurait été mal réalisé, la réflexion des stries présentera encore une déformation (plus faible) comme représenté en référence à la figure 5.

Les différents modes de réalisation décrits ci-dessus sont des exemples donnés à titre illustratif et non limitatif. En effet, il est tout à fait possible pour l'homme de l'art d'utiliser un autre système d'accrochage 105 du bras 103 sur la surface externe du fond 51 du boîtier 5 qu'une pince sans sortir du cadre de la présente description. D'autre part, il est tout à fait possible pour l'homme de l'art d'utiliser un bras 103 présentant des caractéristiques supplémentaires que celles décrites ici, à savoir télescopique ou flexible. Par ailleurs, l'homme de l'art pourra utiliser d'autres techniques additives que l'impression pour la réalisation des bandes sombres 13, 15 sur la mire 9 ; il pourra aussi utiliser des techniques soustractives pour permettre la formation des stries 11 sur la mire 9. Par ailleurs, l'homme de l'art pourra adapter les largeurs « a », « b », « c » des stries 11 et des bandes sombres 13, 15 ou encore la profondeur du boîtier 5 sans sortir du cadre de la présente invention. Ensuite, l'homme de l'art pourra utiliser d'autres moyens pour permettre la coopération de la mire 9 avec le cadre 53 du boîtier sans sortir du cadre de la présente description. De plus, l'homme de l'art pourra utiliser d'autres moyens de transmission des images capturées ou traitées par la caméra 101 que ceux décrits précédemment sans sortir du cadre de la présente description. Enfin, l'homme de l'art pourra également imaginer tout autre type de support qu'un support avec ventouse pour assurer le maintien en place du dispositif d'éclairage 1, comme par exemple un support sur pieds, sans sortir du cadre de la présente description.

Ainsi, l'identification de déformations 2 sur une surface métallique réfléchissante à contrôler 3 quelle qu'en soit la taille est possible grâce au dispositif d'expertise de déformations 200 décrit ci-dessus. Un tel dispositif d'expertise de déformations 200 permet également de limiter la gène ou la fatigue visuelle qui peut être occasionnée lors de la détermination de la présence de déformations 2 sur la surface métallique réfléchissante à contrôler 3. De plus, le dispositif d'expertise de déformations 200 mettant en œuvre ce dispositif d'éclairage 1 est mobile et utilisable par un opérateur notamment sur des terrains accidentés, et bon marché.

## Revendications

1. Dispositif d'expertise de déformations (200) telles qu'un bosselage, un impact ou un enfoncement sur une surface métallique réfléchissante (3), notamment d'une pièce de carrosserie d'un véhicule automobile (30), **caractérisé en ce qu'**il comporte un ensemble portatif comprenant :
→ un dispositif d'identification de déformations (100), telles qu'un bosselage, un impact ou un enfoncement, sur une surface métallique réfléchissante à contrôler (3), notamment d'une pièce de carrosserie d'un véhicule automobile (30), comportant :
un dispositif d'éclairage (1) comprenant :
∘ un boîtier (5) présentant un fond (51) et un cadre (53), ledit cadre (53) définissant une ouverture (55), et la surface extérieure du fond (51) comprenant des moyens de préhensions,
∘ une pluralité de diodes électroluminescentes (7) disposées sur une surface intérieure (51a) du fond (51) du boîtier (5),
∘ une mire (9) recouvrant l'ouverture (55) et disposée entre ladite pluralité de diodes électroluminescentes (7) et ladite surface métallique réfléchissante à contrôler (3), ladite mire (9) présentant une pluralité de stries (11) configurées pour permettre le passage d'au moins une partie de la lumière émise par la pluralité de diodes électroluminescentes (7), lesdites stries (11) étant espacées les unes des autres par des bandes sombres (13, 15) de manière à ce que les stries (11) sont projetées sur la surface métallique réfléchissante à contrôler (3) lorsque les diodes électroluminescentes (7) sont allumées,
→ au moins une caméra (101) configurée pour capturer des images de la réflexion sur la surface métallique réfléchissante à contrôler (3) de la lumière émise par le dispositif d'éclairage (1), la caméra (101) est disposée sur un bras (103) relié au dispositif d'éclairage (1), de sorte que ladite caméra (101) est décalée par rapport au dispositif d'éclairage (1),
le dispositif d'expertise de déformations (200) comportant de plus :
• une caméra additionnelle (201) disposée de manière fixe de sorte à prendre des images comportant au moins une immatriculation (31) du véhicule automobile (30) et un opérateur (25) utilisant le dispositif d'identification de déformations (100), et
• une unité de traitement configurée pour mettre en corrélation des fichiers créés par le dispositif d'identification de déformations (100) d'une part et par la caméra additionnelle (201) d'autre part, lesdits fichiers contenant respectivement des données propres.

2. Dispositif d'expertise de déformations (200) selon la revendication précédente, **caractérisé en ce que** les diodes électroluminescentes (7) sont disposées sur des rubans (17), lesdits rubans (17) étant disposés parallèlement les uns aux autres.

3. Dispositif d'expertise de déformations (200) selon l'une quelconque des revendications précédentes, **caractérisé en ce que** les diodes électroluminescentes (7) sont disposées à intervalles (I) réguliers les unes des autres.

4. Dispositif d'expertise de déformations (200) selon l'une quelconque des revendications précédentes, **caractérisé en ce que** la mire (9) est réalisée en un matériau souple, notamment en tissus.

5. Dispositif d'expertise de déformations (200) selon l'une quelconque des revendications précédentes, **caractérisé en ce que** les stries (11) ont une largeur (a) constante sur l'ensemble de la mire (9).

6. Dispositif d'expertise de déformations (200) selon l'une quelconque des revendications précédentes, **caractérisé en ce que** les stries (11) sont réparties en groupes de stries (21), lesdites stries (11) étant espacées les unes des autres à l'intérieur d'un groupe de stries (21) par des premières bandes sombres (13) ayant une première largeur (b) et lesdits groupes de stries (21) étant espacés les uns des autres par des deuxièmes bandes sombres (15) ayant une deuxième largeur (c).

7. Dispositif d'expertise de déformations (200) selon l'une quelconque des revendications précédentes, **caractérisé en ce qu'**il comporte en outre un diffuseur de lumière (23) disposé entre les diodes électroluminescentes (7) et la mire (9).

8. Dispositif d'expertise de déformations (200) selon l'une quelconque des revendications précédentes, **caractérisé en ce qu'**il comprend des moyens de traitement d'images.

9. Procédé d'expertise de déformations sur une surface métallique réfléchissante (3), notamment d'une pièce de carrosserie d'un véhicule automobile (30), telles qu'un bosselage, un impact ou un enfoncement, **caractérisé en ce qu'**il met en œuvre un dispositif d'expertise (200) selon la revendication 1, et **en ce qu'**il comporte les étapes suivantes :
• disposition (E0) de la caméra additionnelle (201) de manière fixe afin de capturer des images comportant au moins une immatriculation (31) du véhicule automobile (30) et de l'opérateur (25) manipulant le dispositif de d'identification de déformations (100) ;
• déclenchement (E1) d'un enregistrement respectivement des images capturées par la caméra additionnelle (201) d'une part et par la caméra (101) du dispositif d'identification de déformations (100) d'autre part ;
• arrêt de l'enregistrement et sauvegarde (E2) dans des fichiers distincts des images capturées par la caméra additionnelle (201) d'une part et par la caméra (101) du dispositif d'identification de déformations (100) d'autre part ; et
• mise en corrélation (E3) de ces fichiers distincts par l'unité de traitement.

## Patentansprüche

1. Vorrichtung zur Begutachtung von Deformationen (200), wie etwa einer Beule, einer Schlagstelle oder einer Vertiefung, auf einer reflektierenden Metalloberfläche (3), insbesondere eines Karosserieteils eines Kraftfahrzeugs (30), **dadurch gekennzeichnet, dass** sie eine tragbare Anordnung aufweist, welche umfasst:
eine Vorrichtung zur Identifikation von Deformationen (100), wie etwa einer Beule, einer Schlagstelle oder einer Vertiefung, auf einer zu kontrollierenden reflektierenden Metalloberfläche (3), insbesondere eines Karosserieteils eines Kraftfahrzeugs (30), welche aufweist:
eine Beleuchtungsvorrichtung (1), welche umfasst:
∘ ein Gehäuse (5), das einen Boden (51) und einen Rahmen (53) aufweist, wobei der Rahmen (53) eine Öffnung (55) definiert und die Außenfläche des Bodens (51) Greifmittel umfasst,
∘ eine Vielzahl von Leuchtdioden (7), die auf einer Innenfläche (51a) des Bodens (51) des Gehäuses (5) angeordnet sind,
∘ ein Testmuster (9), das die Öffnung (55) bedeckt und zwischen der Vielzahl von Leuchtdioden (7) und der zu kontrollierenden reflektierenden Metalloberfläche (3) angeordnet ist, wobei das Testmuster (9) eine Vielzahl von Streifen (11) aufweist, die dafür ausgelegt sind, den Durchgang wenigstens eines Teils des Lichts zu ermöglichen, das von der Vielzahl von Leuchtdioden (7) ausgesendet wird, wobei die Streifen (11) durch dunkle Bahnen (13, 15) voneinander beabstandet sind, derart, dass die Streifen (11) auf die zu kontrollierende reflektierende Metalloberfläche (3) projiziert werden, wenn die Leuchtdioden (7) eingeschaltet sind,
wenigstens eine Kamera (101), die dafür ausgelegt ist, Bilder der Reflexion des von der Beleuchtungsvorrichtung (1) ausgesendeten Lichts an der zu kontrollierenden reflektierenden Metalloberfläche (3) zu erfassen, wobei die Kamera (101) an einem mit der Beleuchtungsvorrichtung (1) verbundenen Arm (103) so angeordnet ist, dass die Kamera (101) in Bezug auf die Beleuchtungsvorrichtung (1) versetzt ist,
wobei die Vorrichtung zur Begutachtung von Deformationen (200) außerdem aufweist:
• eine zusätzliche Kamera (201), die fest angeordnet ist, derart, dass sie Bilder aufnimmt, die wenigstens ein Kennzeichen (31) des Kraftfahrzeugs (30) und einen Bediener (25), der die Vorrichtung zur Identifikation von Deformationen (100) verwendet, enthalten, und
• eine Verarbeitungseinheit, die dafür ausgelegt ist, Dateien, die von der Vorrichtung zur Identifikation von Deformationen (100) einerseits und von der zusätzlichen Kamera (201) andererseits erzeugt wurden, in Beziehung zu setzen, wobei die Dateien jeweils eigene Daten enthalten.

2. Vorrichtung zur Begutachtung von Deformationen (200) nach dem vorhergehenden Anspruch, **dadurch gekennzeichnet, dass** die Leuchtdioden (7) auf Bändern (17) angeordnet sind, wobei die Bänder (17) parallel zueinander angeordnet sind.

3. Vorrichtung zur Begutachtung von Deformationen (200) nach einem der vorhergehenden Ansprüche, **dadurch gekennzeichnet, dass** die Leuchtdioden (7) in regelmäßigen Abständen (I) voneinander angeordnet sind.

4. Vorrichtung zur Begutachtung von Deformationen (200) nach einem der vorhergehenden Ansprüche, **dadurch gekennzeichnet, dass** das Testmuster (9) aus einem flexiblen Material hergestellt ist, insbesondere aus Gewebe.

5. Vorrichtung zur Begutachtung von Deformationen (200) nach einem der vorhergehenden Ansprüche, **dadurch gekennzeichnet, dass** die Streifen (11) eine konstante Breite (a) auf dem gesamten Testmuster (9) aufweisen.

6. Vorrichtung zur Begutachtung von Deformationen (200) nach einem der vorhergehenden Ansprüche, **dadurch gekennzeichnet, dass** die Streifen (11) in Streifengruppen (21) aufgeteilt sind, wobei die Streifen (11) innerhalb einer Streifengruppe (21) durch erste dunkle Bahnen (13) mit einer ersten Breite (b) voneinander beabstandet sind und die Streifengruppen (21) durch zweite dunkle Bahnen (15) mit einer zweiten Breite (c) voneinander beabstandet sind.

7. Vorrichtung zur Begutachtung von Deformationen (200) nach einem der vorhergehenden Ansprüche, **dadurch gekennzeichnet, dass** sie außerdem einen Lichtdiffusor (23) aufweist, der zwischen den Leuchtdioden (7) und dem Testmuster (9) angeordnet ist.

8. Vorrichtung zur Begutachtung von Deformationen (200) nach einem der vorhergehenden Ansprüche, **dadurch gekennzeichnet, dass** sie Bildverarbeitungsmittel umfasst.

9. Verfahren zur Begutachtung von Deformationen auf einer reflektierenden Metalloberfläche (3), insbesondere eines Karosserieteils eines Kraftfahrzeugs (30), wie etwa einer Beule, einer Schlagstelle oder einer Vertiefung, **dadurch gekennzeichnet, dass** eine Vorrichtung zur Begutachtung (200) nach Anspruch 1 eingesetzt wird, und dadurch, dass es die folgenden Schritte umfasst:
• festes Anordnen (E0) der zusätzlichen Kamera (201), um Bilder zu erfassen, die wenigstens ein Kennzeichen (31) des Kraftfahrzeugs (30) und den Bediener (25), der die Vorrichtung zur Identifikation von Deformationen (100) handhabt, enthalten;
• Auslösen (E1) einer Aufzeichnung der Bilder, die von der zusätzlichen Kamera (201) einerseits bzw. von der Kamera (101) der Vorrichtung zur Identifikation von Deformationen (100) andererseits erfasst wurden;
• Anhalten der Aufzeichnung der Bilder, die von der zusätzlichen Kamera (201) einerseits und von der Kamera (101) der Vorrichtung zur Identifikation von Deformationen (100) andererseits erfasst wurden, und Sichern (E2) derselben in unterschiedlichen Dateien; und
• Inbeziehungsetzen (E3) dieser unterschiedlichen Dateien durch die Verarbeitungseinheit.

## Claims

1. Device for appraising deformations (200) such as an embossing, an impact or an indentation on a reflecting metal surface (3), notably of a bodywork part of a motor vehicle (30), **characterized in that** it comprises a portable assembly comprising:
a device for identifying deformations (100), such as an embossing, an impact or an indentation on a reflecting metal surface to be checked (3), notably of a bodywork part of a motor vehicle (30), comprising:
a lighting device (1) comprising:
∘ a housing (5) having a bottom (51) and a frame (53), said frame (53) defining an aperture (55), and the outer surface of the bottom (51) comprising gripping means,
∘ a plurality of light-emitting diodes (7) disposed on an internal surface (51a) of the bottom (51) of the housing (5),
∘ a test pattern (9) covering the aperture (55) and disposed between said plurality of light-emitting diodes (7) and said reflecting metal surface to be checked (3), said test pattern (9) having a plurality of stripes (11) configured to allow the passage of at least a part of the light emitted by the plurality of light-emitting diodes (7), said stripes (11) being spaced apart from one another by dark bands (13, 15) so that the stripes (11) are projected onto the reflecting metal surface to be checked (3) when the light-emitting diodes (7) are switched on,
at least one camera (101) configured to capture images of the reflection on the reflecting metal surface to be checked (3) of the light emitted by the lighting device (1), the camera (101) is disposed on an arm (103) linked to the lighting device (1), such that said camera (101) is offset with respect to the lighting device (1),
the device for appraising deformations (200) comprising in addition:
• an additional camera (201) disposed in a fixed manner so as to take images including at least a registration plate (31) of the motor vehicle (30) and an operator (25) using the device for identifying deformations (100), and
• a processing unit configured to correlate files created by the device for identifying deformations (100) on the one hand and by the additional camera (201) on the other hand, said files respectively containing specific data.

2. Device for appraising deformations (200) according to the preceding claim, **characterized in that** the light-emitting diodes (7) are disposed on stripes (17), said stripes (17) being disposed parallel to one another.

3. Device for appraising deformations (200) according to either one of the preceding claims, **characterized in that** the light-emitting diodes (7) are disposed at regular intervals (I) to one another.

4. Device for appraising deformations (200) according to any one of the preceding claims, **characterized in that** the test pattern (9) is produced in a flexible material, notably made of fabric.

5. Device for appraising deformations (200) according to any one of the preceding claims, **characterized in that** the stripes (11) have a constant width (a) over all of the test pattern (9).

6. Device for appraising deformations (200) according to any one of the preceding claims, **characterized in that** the stripes (11) are divided up into groups of stripes (21), said stripes (11) being spaced apart from one another within a group of stripes (21) by first dark bands (13) having a first width (b) and said groups of stripes (21) being spaced apart from one another by second dark bands (15) having a second width (c).

7. Device for appraising deformations (200) according to any one of the preceding claims, **characterized in that** it also comprises a light diffuser (23) disposed between the light-emitting diodes (7) and the test pattern (9).

8. Device for appraising deformations (200) according to any one of the preceding claims, **characterized in that** it comprises image processing means.

9. Method for appraising deformations on a reflecting metal surface (3), notably of a bodywork part of a motor vehicle (30), such as an embossing, an impact or an indentation, **characterized in that** it implements an appraisal device (200) according to Claim 1, and **in that** it comprises the following steps:
• arranging (E0) the additional camera (201) in a fixed manner so as to capture images including at least a registration plate (31) of the motor vehicle (30) and of the operator (25) manipulating the device for identifying deformations (100);
• triggering (E1) a recording, respectively of the images captured by the additional camera (201) on the one hand and by the camera (101) of the device for identifying deformations (100) on the other hand;
• stopping the recording and saving (E2) in distinct files, the images captured by the additional camera (201) on the one hand and by the camera (101) of the device for identifying deformations (100) on the other hand; and
• correlating (E3) distinct files using the processing unit.
